# EUROPÄISCHE PATENTSCHRIFT

(11) **EP 3 727 734 B1**
(45) Veröffentlichungstag und Bekanntmachung des Hinweises auf die Patenterteilung: **02.04.2025**
(21) Anmeldenummer: 18807932.1
(22) Anmeldetag: 20.11.2018
(51) Int. Cl.: B23F 23/12, B23F 5/16, G05B 19/18, G05B 19/408

(54) **VERFAHREN ZUR BEARBEITUNG VON VERZAHNUNGEN, SOWIE VERZAHNUNGSMASCHINE UND STEUERPROGRAMM DAFÜR**
METHOD FOR MACHINING TOOTHINGS, AS WELL AS TOOTHING MACHINE AND CONTROL PROGRAM FOR SAME
PROCÉDÉ D'USINAGE DE DENTURES, MACHINE DE DENTURE ET PROGRAMME DE COMMANDE ASSOCIÉ

(30) Priorität: 22.12.2017 DE 102017011978
(43) Veröffentlichungstag der Anmeldung: 28.10.2020
(73) Patentinhaber: GLEASON-PFAUTER MASCHINENFABRIK GMBH, 71636 Ludwigsburg (DE)
(72) Erfinder: WEPPELMANN, Edgar, 71679 Asperg (DE); KRESCHEL, Jürgen, 71282 Hemmingen (DE)
(74) Vertreter: Leinweber & Zimmermann
(86) Internationale Anmeldenummer: PCT/EP2018/081969
(87) Internationale Veröffentlichungsnummer: WO 2019/120831

(56) Entgegenhaltungen:
- EP-A1- 2 537 615
- EP-A1- 2 614 923
- EP-A1- 2 732 895
- DE-A1- 4 302 353
- JP-B2- 3 547 469
- US-A1- 2009 227 182
- US-A1- 2017 008 148

## Beschreibung

Die Erfindung betrifft ein Verfahren zum Bearbeiten von Verzahnungen, zu dem man ein um seine Drehachse drehend angetriebenes, scheibenförmiges und verzahntes Werkzeug mit geometrisch bestimmter Schneide einsetzt, dessen Werkzeugzähne aus einem Grundwerkstoff gefertigt und wenigstens an den Zahnflanken mit einer verschleißfestigkeitserhöhenden Beschichtung versehen sind, sowie einer Stirnseite des Werkzeugs zugewandte Spanflächen aufweisen, welche man von Zeit zu Zeit im Rahmen einer Wiederaufbereitung des Werkzeugs nachschleift,

Derartige Verfahren gemäß dem Oberbegriff des Anspruchs 1 sowie eine Verzanhungsmaschine gemäß dem Oberbegriff des Anspruchs 16 sind gut bekannt, beispielsweise durch das Wälzschälen (Power Skiving) wie etwa in EP 2 537 615 A1 beschrieben, worauf bezüglich der Schneidverhältnisse und der Kinematik des Wälzschälens Bezug genommen wird.

Bei dem Wälzschälen handelt es sich um ein abwälzendes Bearbeitungsverfahren, das mittlerweile hinsichtlich der Bearbeitungsgeschwindigkeit nahe an das effiziente Wälzfräsen herankommt, jedoch aufgrund der Werkzeugform und Bearbeitungskinematik Vorteile bietet, wie etwa die Möglichkeit, in der Regel auch gut Innenverzahnungen bearbeiten zu können.

Für eine längere Haltbarkeit der herangezogenen Schälräder ist deren Grundwerkstoff, der beispielsweise Hartmetall (HM) oder ein Powder Metal High-Speed Steel (PM-HSS) sein kann, mit einer die Verschleißfestigkeit erhöhenden Beschichtung versehen, die somit für die Verlängerung der Einsatzzeit und der Gesamtlebensdauer des Werkzeugs sorgt.

Bei der Bearbeitung von Werkstücken beispielsweise einer größeren Werkstückcharge verschleißt das Werkzeug, so dass nach einer bestimmten Zeit ein Werkzeugaustausch vorgenommen wird. Bei einem typischen Einsatz eines HSS-Werkzeugs sollte je nach bearbeitetem Material nach 3 bis 12 Stunden Bearbeitung ein Werkzeugwechsel vorgenommen werden, um einer Qualitätsverschlechterung der bearbeiteten Verzahnungen oder auch einer weitergehenden Schädigung des Werkzeugs vorzubeugen, HM-Werkzeuge halten vergleichsweise deutlich länger, etwa einen Faktor 2 bis 3+ mal so lang.

Ist somit die für die jeweilige Bearbeitung vorgesehene Verschleißgrenze erreicht, wird ein neues Werkzeug in die Bearbeitungsmaschine eingespannt, wonach die Bearbeitung beispielsweise der größeren Werkstückcharge fortgesetzt werden kann. Das benutzte Werkzeug kann jedoch für eine weitere Verwendung wiederaufbereitet werden, solange seine Endverschleißgrenze noch nicht erreicht ist. Bei einer Wiederaufbereitung aus dem Stand der Technik wird der Verschleiß gemessen (Der Verschleiß wird dabei üblicherweise am Kopf des Werkzeugzahns gemessen, Blickrichtung radial auf den Werkzeug-ZahnKopf, da er hier häufig am größten ist, in axialer Richtung, d. h. in Richtung der Kopfflanke.), die Spanflächen geschliffen, bis der Verschleiß nicht mehr sichtbar ist, gegebenenfalls zuzüglich eines Sicherheitsbetrags, wonach das Werkzeug ent- und danach wiederbeschichtet wird. Der Maschinenbetreiber erhält das Werkzeug dann neu beschichtet, allerdings mit aufgrund des Nachschleifens geringerer Höhe und bei konischen Kopfflanken auch mit entsprechend geringerem Durchmesser zurück, und berücksichtigt diese Änderungen für den weiteren Einsatz des Werkzeugs.

EP 2 537 615 A1 offenbart ein robustes Wälzschälverfahren mit nachschleifbaren Schälrädern sowie eine Verzahnungsmaschine zur Ausführung des Verfahrens.

EP 2 732 895 A1 offenbart ein Abrichten z.B. von abrichtbaren Schleifschnecken auf einer Verzahnungsmaschine.

EP 2 614 923 A1, US 2009/227182 A1, US 2017/008148 A1 und DE 43 02 353 A1 betreffen jeweils abrichtbare Schleifwerkzeuge.

JP 3 547 469 B2 offenbart Schleifprozesse, speziell abrichtbare Werkzeuge zum Honen (Schabschleifen) von Werkstücken zu deren Feinbearbeitung.

Der Erfindung liegt die Aufgabe zugrunde, ein Verfahren der eingangs genannten Art insbesondere im Hinblick auf eine verbesserte Eingliederung in einen Gesamtprozess weiterzubilden.

Diese Aufgabe wird in verfahrenstechnischer Hinsicht von der Erfindung dadurch gelöst, dass man den Einsatz des Werkzeugs nach wenigstens einem Nachschleifen mit jedenfalls entlang der Schneiden aus dem Grundwerkstoff gebildeten Bereichen der Spanflächen wiederaufnimmt und fortsetzt.

Dabei beruht die Erfindung auf der Erkenntnis, dass der dadurch unmittelbar bewirkte Nachteil einer verringerten Gesamtlebensdauer einerseits und verringerten Einsatzzeit bis zum nächsten Nachschleifen andererseits, da die Spanflächen bei wiederaufgenommener Bearbeitung wenigstens entlang der Schneiden, bevorzugt insgesamt keine Beschichtung aufweisen und demnach rascher verschleißen, durch Vorteile im Gesamtprozess ausgeglichen oder sogar überwogen werden kann. Denn aufgrund der nicht mehr erfolgenden Wiederbeschichtung des Werkzeugs nach dem Nachschleifen kann das Werkzeug bereits rascher wieder auf insbesondere der gleichen Verzahnungsmaschine zum Einsatz kommen, so dass die Anzahl der zusätzlich vom Maschinenbetreiber vorzuhaltenden Werkzeuge verringert werden kann. Zudem ist aufgrund der geringeren Einflussnahme auf das Werkzeug nur durch das Nachschleifen der Spanflächenbereiche bzw. Spanflächen die Grundvoraussetzung geschaffen, Maßnahmen für gegebenenfalls erforderliche maschinenseitige Korrekturen zur Qualitätssicherung der bearbeiteten Verzahnungen nach wiederaufgenommener Bearbeitung mit geringerem Zeitaufwand auszuführen, der einen maschinenseitigen Bearbeitungszeitverlust, der jedenfalls während der Zeit des Nachschärfens auftreten kann, wenigstens zum Teil kompensieren kann.

Bei dem Werkzeug handelt es sich um ein Schälrad für das Wälzschälen oder ein Schälrad für das Hartschälen der Verzahnung oder um ein Stoßrad zum Wälzstoßen von Zahnrädern. Der Grundwerkstoff könnte einer der oben bereits angesprochenen Werkstoffe Hartmetall (HM) oder ein Powder-Metal-High-Speed-Steel (PM-HSS) sein, ist jedoch nicht darauf eingeschränkt. Die die Verschleißfähigkeit erhöhende Beschichtung könnte beispielsweise AlCrN sein, oder jegliche andere dem Fachmann hierfür gängige Beschichtung wie etwa TiN. Das Bearbeitungsverfahren kann für innen- wie für außenverzahnte Werkstücke sein (für letztere insbesondere im Fall bestehender Störkonturen geeignet).

Für den erstmaligen Einsatz nach Werkzeugherstellung sind jedenfalls die Zahnflanken der Werkzeugzähne mit dieser Beschichtung beschichtet, vorzugsweise sind zu diesem Zeitpunkt, d.h. bei dem Neuwerkzeug, auch die Spanflächen beschichtet.

Bevorzugt werden beim Nachschleifen die Spanflächen als ganze nachgeschliffen, wodurch der Nachschleifvorgang vereinfacht wird, jedenfalls im Bereich der Schneiden, beim Schälrad bzw. Stoßrad im Spanflächenbereich der Zahnkanten, wird das Nachschleifen zu deren Nachschärfen von Zeit zu Zeit vorgenommen.

Zweckmäßig wird bei dem Nachschleifen ein Materialbetrag so abgeschliffen, dass danach die Verschleißmarken an allen Zähnen vollständig entfernt sind. Bei gängigen Verfahren aus dem Stand der Technik gilt als Faustregel, dass PM-HSS- bzw. HM-Werkzeuge solange eingesetzt werden, bis die Verschleißmarkenbreite zwischen 0,2 bis 0,3 mm bzw. 0,1 bis 0,2 mm liegen - oder bis eine nicht mehr hinnehmbare Verschlechterung der Qualität der bearbeiteten Werkstücke festgestellt wird - je nachdem, was früher eintritt.

In einer bevorzugten Verfahrensgestaltung ist vorgesehen, dass das Nachschleifen vergleichsweise häufiger durchgeführt wird. So wird für HM-Werkzeuge ein Nachschleifen bevorzugt bereits vor oder bei Erreichen einer Verschleißmarkenbreite von 0,08 mm, weiter bevorzugt von 0,065 mm, insbesondere bereits ab 0,05 mm vorgenommen. Für PM-HSS-Werkzeuge ist vorgesehen, bereits bei Verschleißmarkenbreiten von 0,16 mm, weiter bevorzugt bereits ab 0,13 mm, insbesondere bereits ab 0,1 mm vorzunehmen. Dies gilt bevorzugt soweit die Entscheidung für das Nachschleifen sich nach den Verschleißmarken richtet, zweckmäßig kann zusätzlich vorgesehen werden, das Nachschleifen anzuordnen, wenn bereits zuvor eine vorgegebene Werkstückqualität nicht mehr erreicht wird. Da bei wenigstens einem Nachschleifen des Werkzeugs kein Wiederbeschichten des Werkzeugs erfolgt, bevorzugt bei mehreren, insbesondere bei allen Nachschleifvorgängen, ist der durch das häufigere Nachschleifen in Kauf genommene Zeitverlust erträglich.

Dieses gegenüber dem Stand der Technik, in dem möglichst lange zugewartet wird, bis das Werkzeug nachgeschärft wird, vergleichsweise deutlich frühzeitigere Nachschärfen wird von der Erfindung auch als von jeglicher Frage der Beschichtung oder Nichtbeschichtung unabhängiger Aspekt betrachtet und entsprechend als eigenständig und eigenständig schutzfähig offenbart. Somit offenbart die Erfindung als eigenständig schutzfähig ein Verfahren zum Bearbeiten von Verzahnungen, zu dem man ein um seine Drehachse drehend angetriebenes, scheibenförmiges und verzahntes Werkzeug mit geometrisch bestimmter Schneide einsetzt, dessen Werkzeugzähne einer Stirnseite des Werkzeugs zugewandte Spanflächen aufweisen, welche man von Zeit zu Zeit nachschleift, wobei der Einsatz des Werkzeugs nach dem Nachschleifen wiederaufgenommen und fortgesetzt wird, wobei das Verfahren im Wesentlichen dadurch gekennzeichnet ist, dass bereits bei oder vor Erreichen einer Verschleißmarkenbreite von 0,16 mm, weiter bevorzugt 0,13 mm, insbesondere 0,1 mm vorgenommen wird, dies insbesondere für PM-HSS-Werkzeuge, und weiter bevorzugt bereits vor oder bei Erreichen einer Verschleißmarkenbreite von 0,08 mm, weiter bevorzugt von 0,065 mm, insbesondere bereits ab 0,05 mm das Nachschärfen vorgenommen wird, insbesondere bei HM-Werkzeugen. Dieser Aspekt ist mit den vorgenannten und nachfolgend genannten weiteren Aspekten der Erfindung kombinierbar. So ist im Rahmen der Erfindung auch erkannt worden, dass es insbesondere beim Bearbeitungsverfahren des Hartschälens aufgrund bereits geringen Verschleißes am Werkzeug zu einer Werkzeugabdrängung beim Bearbeiten kommen kann und im Zuge dessen zu ungewollten Abweichungen von der gewünschten Bearbeitung. Dem kann durch ein häufigeres Nachschärfen entgegengetreten werden. Dafür kann es ausreichend sein, nur einen geringen Betrag nachzuschärfen, indem etwa nur wenig zugestellt wird.

Im Rahmen der Erfindung ist jedoch auch vorgesehen, dass das Werkzeug im Rahmen seiner Gesamtlebensdauer ein oder mehrere Male wie bislang im Stand der Technik üblich, im Rahmen einer Wiederaufbereitung auch zum Teil oder gänzlich neu beschichtet wird. Dies wird insbesondere dann bevorzugt, wenn bei einem Nachschleifvorgang auch Zahnflanken und/oder Kopfflanke nachgeschliffen werden.

In einer besonders bevorzugten Ausführungsform ist vorgesehen, dass der fortgesetzte Einsatz des Werkzeugs auf der gleichen Verzahnungsmaschine erfolgt wie der Einsatz vor dem Nachschleifen. Abgesehen von aufgrund des Nachschleifens erforderlich gewordenen Änderungen der Maschinenachseinstellung sind somit die für dieses Werkzeug bereits eingerichteten Maschinenachseinstellungen verwendbar. Dann muss eine neue Maschine nicht auf dieses Werkzeug eingerichtet werden.

In einer besonders bevorzugten Ausgestaltung ist vorgesehen, dass eine Maschinensteuerung für den fortgesetzten Einsatz insbesondere automatisch eine Information über die Abtragtiefe beim Nachschärfen erhält. Damit ist die Schlüsselinformation für (etwa wegen Höhenänderung, Durchmesserveränderung des Werkzeugs) erforderliche Änderungen der Maschinenachseinstellungen bereits in der Maschinensteuerung vorhanden.

In diesem Zusammenhang ist eine Gestaltung möglich, bei der die fortgesetzte Bearbeitung ohne zwischenzeitliche Vermessung einer ersten nach Wiederaufnahme überarbeiteten Verzahnung erfolgt. Durch die im Vergleich zum Stand der Technik geringere Beeinflussung des Werkzeugs bei der Wiederaufbereitung aufgrund der nicht vorgenommenen Entschichtung/Wiederbeschichtungsvorgänge führt der fortgesetzte Einsatz bereits mit den richtigen Maschinenachseinstellungen zu akzeptablen Bearbeitungsqualitäten.

Ein erneutes Vermessen des Werkzeugs nach dem Nachschleifen ist ebenfalls nicht mehr zwingend erforderlich und kann zweckmäßig unterlassen werden, so dass sich Potential für relative weitere Zeiteinsparungen ergibt.

Für den Ort des Nachschleifens sind mehrere Varianten denkbar. So könnte das Werkzeug grundsätzlich außerhalb der Bearbeitungsposition und Aufspannung, sogar räumlich völlig von der Verzahnungsmaschine, auf der das Werkzeug arbeitete, erfolgen.

In einer möglichen Variante wird das Werkzeug über einen Werkzeugwechsler vor dem Nachschleifen ausgewechselt und das Nachschleifen erfolgt auf einer insbesondere über den Werkzeugwechsler angekoppelten Nachschleifstation oder in dem Werkzeugwechsler. Ebenfalls vorgesehen ist eine Variante, bei der das Werkzeug zwar in der Werkzeugaufspannung des bisherigen Einsatzes verbleibt, das Nachschleifen jedoch nicht in dem gleichen Bearbeitungsraum des Einsatzes erfolgt, sondern in einem benachbarten Nachschleifraum, beispielsweise durch ein Verschwenken oder Verschieben des Werkzeugkopfes oder eines diesen tragenden Hauptständers. Dann besteht eine große Auswahl an Möglichkeiten zur Realisierung eines Schleifhubs, neben den Achsen des Werkzeugkopfes auch davon separate Achsen, auch in Kombination; auch Diagonalachsen sind denkbar.

Eine bevorzugte Variante ist diejenige, bei der das Nachschleifen in der Werkzeugaufspannung einer Verzahnungsmaschine oder einem erweiterten Bearbeitungszentrum erfolgt, auf der der vorherige und/oder fortgesetzte Einsatz erfolgt. Insbesondere kann das Nachschleifen in dem Bearbeitungsraum der Verzahnungsbearbeitung erfolgen, wobei für das Nachschleifen selbstverständlich die für das Werkzeug bereits vorhandenen Maschinenachsen eingesetzt werden können und bevorzugt auch eingesetzt werden, als Positionierachsen oder auch als während des Nachschleifens angesteuerte Achsen. So kann auch vorgesehen werden, dass das Bearbeitungswerkzeug auf der gleichen Verzahnungsmaschine aufgespannt bleibt, bis es am Ende seiner Gesamtlebensdauer angelangt ist oder bis die Werkstücksorte, für die es ausgelegt ist (Werkstückcharge), geändert wird.

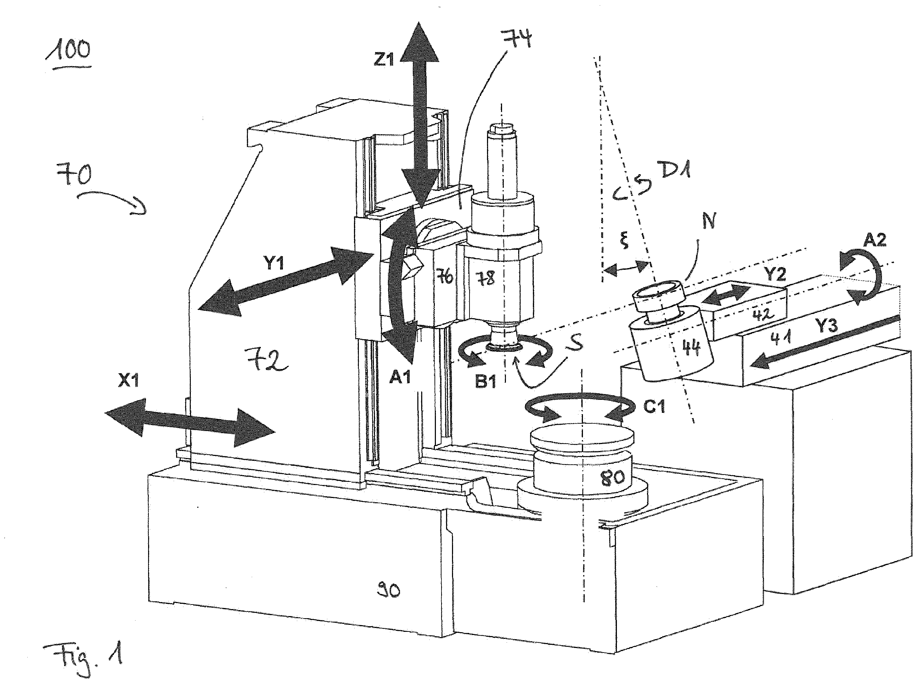

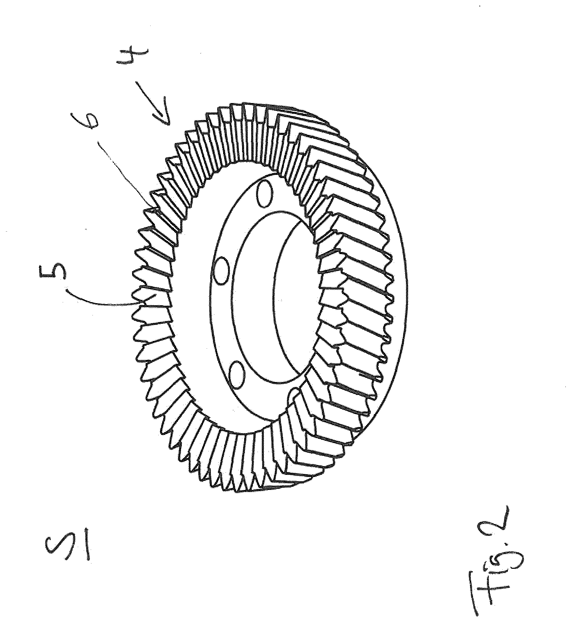

Die erforderlichen Achsbewegungen zur Positionierung und ggf. für einen Schleifhub des Nachschleifwerkzeugs können auch von Bewegungsachsen ausgeübt werden, die das Nachschleifwerkzeug aktiv bewegen. Die konkrete Realisierung des Schleifhubs wird man bevorzugt von den vorhandenen Platzverhältnissen und auch der herangezogenen Form des Bearbeitungswerkzeugs (etwa im Treppenschliff) abhängig machen, wie auch von der Art des Nachschleifwerkzeugs (Topfscheibe oder Schleifscheibe/schleifender Drehkörper mit zylindrischer oder konischer schleifender Mantelfläche). Der Schleifhub kann, muss jedoch nicht horizontal sein. Denkbar ist beispielsweise das Nachschleifen eines Werkzeugs mit einem Treppenschliff (siehe Fig. 2) mit der Mantelfläche eines zylindrischen oder kegeligen Schleifwerkzeugs. In diesem Fall könnte die Hubbewegung durch eine schräg eingestellte Tangentialachse (Y1 in Fig. 1) ausgeführt werden, denkbar ist auch, eine Bewegungsachse für die Schleifhubbewegung einer anderen Achse zu überlagern, etwa die für eine Verfahrbewegung des Bearbeitungswerkzeugs (Achse Z1 in Fig. 1) parallel zur Drehachse des bearbeiteten Werkstücks.

In einer bevorzugten Variante wird dazu vorgesehen, dass man das Nachschleifwerkzeug aus einer bezüglich einer radialen Zustellbewegung der Verzahnungsbearbeitung tangentialer Richtung zuführt. Diese Konstellation führt zu einer günstigen Ausnutzung der Platz- und Raumverhältnisse. Diese Positions-Zuführachse könnte auch herangezogen werden, um den Schleifhub zu realisieren. Bevorzugt ist jedoch auch eine Variante, in der für den Schleifhub eine Bewegungsachse des Bearbeitungswerkzeugs herangezogen wird.

Je nach Gestaltung des nachzuschleifenden Werkzeugs sind Varianten des kontinuierlichen Nachschleifens denkbar, es wird jedoch auch an eine intermittierende Arbeitsweise gedacht, bei der die Spanflächen der einzelnen Zähne nacheinander nachgeschliffen werden und zwischen zwei solchen Bearbeitungen eine Verdrehung des Werkzeugs um seine Drehachse vorgenommen wird. Bei diesen intermittierenden Verfahren wird bevorzugt von einem Verdrehen auf die jeweils nächste Spanfläche abgewichen, und die Spanflächen werden in einer Reihenfolge abgeschliffen, bei der sich Verschleißerscheinungen des Nachschleifwerkzeugs oder auch Temperaturveränderungen nicht in ansteigender Weise in Werkzeugumfangsrichtung auswirken, sondern sich über den Werkzeugumfang verteilen.

Je nach Gestaltung des Nachschleifwerkzeugs kann vorgesehen werden, ggf. auch ohne Schleif-Hubbewegung auszukommen, insbesondere wenn im Bearbeitungseingriff die schleifende Fläche die Spanfläche voll abdeckt. In anderen Ausführungsformen, die bevorzugt werden, ist vorgesehen, dass die Spanfläche unter Ausführung einer Schleif-Hubbewegung nachgeschliffen wird, wobei letztere insbesondere horizontal sein kann.

In einer möglichen Verfahrensgestaltung bleibt ein Schwenkwinkel der Werkzeugachsorientierung zwischen dem Einsatz bei der Bearbeitung und dem Nachschleifen unverändert. Auf diese Weise wird jeglicher Genauigkeitsverlust durch Änderung dieser Werkzeugachsorientierung über einen dazu vorgesehenen Schwenkwinkel vermieden.

In einer bevorzugten Ausführungsform weist das Werkzeug einen von Null verschiedenen Kopfspanwinkel auf und ein Schwenkwinkel für die Werkzeugachsorientierung wird zum Nachschleifen auf den Kopfspanwinkel eingestellt. Dies ermöglicht einfache Nachschleifbewegungen. Wie weiter unten erläutert, ist jedoch auch eine Abstimmung eines Offsets der Schleifposition mit Überlagerungsbewegungen anstelle einer Schwenkwinkeleinstellung möglich.

In einer möglichen Ausgestaltung wird vor dem Nachschleifen ein Antasten des Werkzeugs mit dem Nachschleifwerkzeug vorgenommen, insbesondere semi-automatisch oder automatisch. Diese dient der genauen Relativpositionierung von Nachschleifwerkzeug und nachzuschleifendem Werkzeug in Höhenrichtung (Axialrichtung) und/oder hinsichtlich der Drehlage der Zähne bzw. Zahnlücken des Werkzeugs.

Wie oben bereits angemerkt, enthält die Maschinensteuerung vorzugsweise Informationen über den Nachschleifvorgang. In einer besonders bevorzugten Ausgestaltung ist vorgesehen, dass die Maschinensteuerung die für den fortgesetzten Einsatz aufgrund einer sich durch das Nachschleifen ergebenden Höhen- und/oder Durchmesserveränderung des Werkzeugs gegenüber der vorherigen Bearbeitung erforderlichen Anpassung der Maschinenachseinstellungen eigenständig berechnet (und die Maschinenachseinstellung dann entsprechend anpasst). Dazu verfügt die Maschinensteuerung über die üblichen Auslegungsdaten des Werkzeugs (umfassend Höhe, Durchmesser, Konizität).

In einer bevorzugten Variante weist das Werkzeug einen Treppenschliff auf. Auch für diese etwa einen Planschiff über mehrere Zähne hinweg unmöglich machenden Werkzeuggestaltung werden gute Ergebnisse erreicht.

Dieses Nachschleifen eines Werkzeugs mit Treppenschliff (siehe Fig. 2) könnte mit beispielsweise einer Topfscheibe ausgeführt werden. In einer ebenfalls bevorzugten Variante ist jedoch auch vorgesehen, dass der nachschleifende Bearbeitungseingriff mit einer Mantelfläche eines zylindrischen oder kegeligen Nachschleifwerkzeugs erfolgt. Dieser Aspekt wird im Zusammenhang mit dem Nachschleifen des Bearbeitungswerkzeugs in seinem aufgespannten Zustand in der Werkzeugaufspannung der Bearbeitung auch unabhängig davon, ob die Bearbeitungswerkzeuge beschichtet sind oder nicht, als vorteilhaft angesehen und entsprechend als eigenständig und eigenständig schutzwürdig offenbart.

Es ist jedoch ebenfalls daran gedacht, mit Werkzeugen zu arbeiten, bei denen die zu einem Umfangskreis um die Werkzeugachse gehörigen Abschnitte der Spanflächen bezüglich der Werkzeugdrehachse auf gleicher axialer Höhe liegen, und die somit keinen Treppenschliff aufweisen.

In einer bevorzugten Ausführungsform ist vorgesehen, dass der Normalenvektor auf die schleifende Fläche des Nachschleifwerkzeugs überwiegend radial zur Drehachse des Nachschleifwerkzeugs verläuft. Insbesondere wird hier an drehsymmetrische Schleifkörper und Schleifscheiben gedacht, bei denen die schleifende Fläche auf der Mantelfläche des Nachschleifwerkzeugs liegt. Diese kann zylindrisch oder konisch gestaltet sein.

In einer anderen, ebenfalls bevorzugten Ausführungsform wird auch an Nachschleifwerkzeuge gedacht, bei denen der Normalenvektor auf die schleifende Fläche überwiegend parallel zur Drehachse des Nachschleifwerkzeugs verläuft. Als hierzu geeignete Werkzeuge sind insbesondere topfscheibenartige Werkzeuge gedacht, auch an tellerscheibenartige Werkzeuge.

In einer bevorzugten Ausgestaltung wird wenigstens eine das Nachschleifwerkzeug aktiv bewegende Maschinenachse zur Relativpositionierung des Nachschleifwerkzeugs zu dem nachzuschleifenden Werkzeug eingesetzt.

Eine derartige Anordnung in Kombination mit einer in der Werkzeugaufspannung des Bearbeitungseinsatzes stattfindenden Nachschleifen wird, auch unabhängig von der Frage der Werkzeugbeschichtung, als vorteilhaft angesehen.

Es ist jedoch bevorzugt zusätzlich oder alternativ vorgesehen, dass wenigstens eine das nachzuschleifende Werkzeug aktiv bewegende Maschinenachse zur Relativpositionierung zwischen Nachschleifwerkzeug und Werkzeug eingesetzt wird.

In einer bevorzugten Ausführungsform ist vorgesehen, dass Drehbewegungen von Werkzeug und Nachschleifwerkzeug zur Erzeugung von am Werkzeug überwiegend radial verlaufenden Schleifriefen aufeinander abgestimmt werden. Die überwiegend radial verlaufenden Schleifriefen werden gegenüber tangentialer oder zufälliger Orientierung der Schleifriefen als vorteilhaft angesehen. In diesem Zusammenhang kann bevorzugt vorgesehen werden, dass die jeweils überwiegende Richtungskomponente von Schleifbewegung und Schleifhubbewegung im Schleifeingriffsbereich übereinstimmen.

Weiter kann vorgesehen werden, dass das nachzuschleifende Werkzeug und das Nachschleifwerkzeug beim Nachschleifen in Projektion auf die Werkzeugscheibenebene gesehen in zwei nicht zusammenhängenden Bereichen überlappen, die insbesondere von einem mehrere Werkzeugzähne übergreifenden Trennbereich getrennt sind (d.h., die Bereiche sind nicht nur jeweils deswegen voneinander getrennt, dass es Zahnlücken gibt). Diese Variante wird insbesondere für nicht im Treppenschliff geschliffene Werkzeuge im nicht-intermittierenden Nachschleifverfahren bevorzugt. Sie erlaubt günstige Schleifrichtungsverhältnisse.

Insbesondere mag jedoch vorgesehen werden, in dem einen Bereich zu schleifen und in dem anderen Bereich der nicht zusammenhängenden Bereiche auf einen Schleifkontakt zu verzichten. Dies kann erreicht werden, indem etwa durch eine Schwenkachse die Schleifebene des Nachschleifwerkzeugs in Außerparallelität mit der Stirnebene des Werkzeugs gebracht wird. Diese kann äußerst gering sein, beispielsweise in Grad ausgedrückt einem Schwenkwinkel von 0,01° bis 0,03° entsprechen, damit die Abweichung von der Parallelität in dem Bereich mit Schleifkontakt nur minimal ist.

Die oben zum Teil bereits erläuterten Aspekte der Schleifrichtungen werden von der Erfindung auch unabhängig von jeglicher Frage der Beschichtung als vorteilhaft angesehen. Entsprechend offenbart die Erfindung als eigenständig und eigenständig schutzwürdig ein Verfahren zum Bearbeiten von Verzahnungen, zu dem man ein um seine Drehachse drehend angetriebenes, scheibenförmiges und verzahntes, insbesondere im Treppenschliff verzahntes Werkzeug mit geometrisch bestimmter Schneide einsetzt, dessen Werkzeugzähne an der Stirnseite des Werkzeugs zugewandte Spanflächen aufweisen, welche man von Zeit zu Zeit im Rahmen einer Wiederaufbereitung des Werkzeugs nachschleift, und das im Wesentlichen dadurch gekennzeichnet ist, dass im Schleifkontaktbereich in einer Projektion auf die Scheibenebene des Werkzeugs gesehen die überwiegende Richtungskomponente einer Tangente der rotatorischen Schleifbewegung des zum Nachschleifen eingesetzten Nachschleifwerkzeugs parallel zu der bezüglich der Werkzeugdrehachse des nachgeschliffenen Werkzeugs radialen Richtung verläuft.

Diese eigenständige Gestaltung kann ebenfalls mit den zuvor genannten weiteren Aspekten kombiniert werden.

Die Erfindung ist ebenfalls in Form eines Steuerprogramms gemäß Anspruch 15 unter Schutz gestellt, das, wenn auf einer Maschinensteuerung der Verzahnungsmaschine ausgeführt, die Verzahnungsmaschine zur Ausführung eines Verfahrens nach einem der oben genannten Aspekte steuert.

Des Weiteren ist die Erfindung vorrichtungstechnisch unter Schutz gestellt durch eine Verzahnungsmaschine gemäß Anspruch 16 mit einer Werkstückspindel zur drehend antreibbaren Lagerung eines eine Verzahnung tragenden Werkstücks, einer Werkzeugspindel zur drehend angetriebenen Lagerung eines scheibenförmigen und verzahnten Werkzeugs mit geometrisch bestimmter Schneide und mit Maschinenachsen zur Relativpositionierung von Werkzeug und Werkstück sowie einer Maschinensteuerung zur Steuerung der mit dem Werkzeug ausgeführten Verzahnungsbearbeitung, die im Wesentlichen dadurch gekennzeichnet ist, dass die Maschinensteuerung ein Steuerprogramm wie zuvor erwähnt aufweist und Bewegungsmittel, die bei Betätigung ein Nachschleifwerkzeug zum Nachschleifen der Spanflächen der Werkzeugzähne in Schleifeingriff mit dem Werkzeug bringt.

Dabei ist besonders bevorzugt vorgesehen, dass die Bewegungsmittel wenigstens eine Maschinenachse aufweisen, die die Lage oder Orientierung einer Drehachse des Nachschleifwerkzeugs veränderbar einstellen kann.

Ebenfalls vorgesehen sind die dem Fachmann bekannten Pick-up-Lösungen für eine Implementierung der erfindungsgemäßen Nachschleiflösungen. Dabei kann vorgesehen sein, dass eine das Nachschleifwerkzeug tragende Pick-up-Spindel in die Position verfahren werden kann, in der eine als Pick-up-Spindel ausgeführte Werkstückspindel beim Bearbeitungsprozess das Werkstück trägt. Es wird jedoch auch an Lösungen gedacht, in denen eine Relativbewegung zum Verbringen des Werkzeugs von einer Bearbeitungsposition in eine Nachschärfposition und vice versa (d.h., zwischen den beiden Spindeln) durch eine aktive Bewegung des Werkzeugkopfes erfolgt.

Weitere Merkmale, Einzelheiten und Vorteile der Erfindung ergeben sich aus der nachfolgenden Beschreibung mit Bezug auf die beigefügten Figuren, von denen
- Fig. 1: eine Verzahnungsmaschine mit integrierter Nachschleifanordnung zeigt,
- Fig. 2: ein nachzuschleifendes Werkzeug in Form eines Schälrads im Treppenschliff zeigt,
- Fig. 3: schematisch einen Nachschleifeingriff passend zu einem Treppenschliff zeigt,
- Fig. 4: schematisch einen Eingriff passend zu einem von Null verschiedenen Kopfspanwinkel zeigt,
- Fig. 5: Positionierungsanordnungen sowie Schleifhubmöglichkeiten zeigt, noch außerhalb Eingriff,
- Fig. 6: die in Fig. 5 dargestellte Variante im Eingriff darstellt,
- Fig. 7: eine zu Fig. 5 alternative Anordnungsmöglichkeit zeigt,

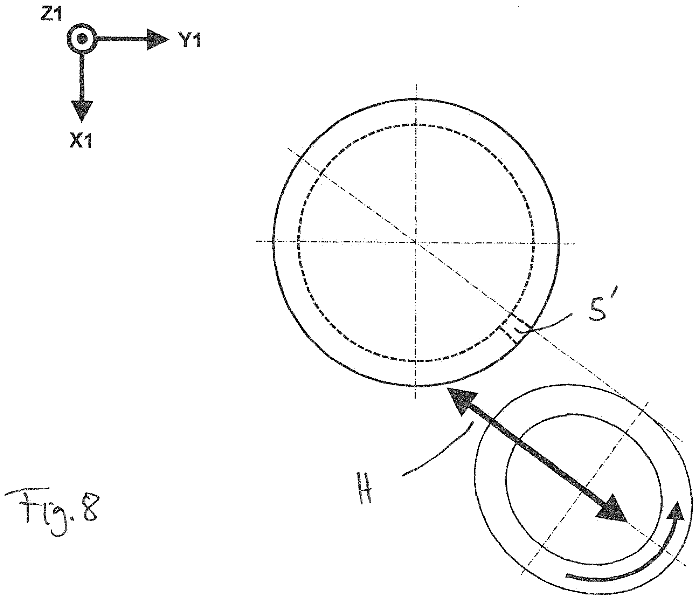

- Fig. 8: eine nochmals verschiedene Anordnungsmöglichkeit zeigt,
- Fig. 9: eine schematische Anordnung für eine Bearbeitung ohne Werkzeugtreppenschliff zeigt, und
- Fig. 10: eine Anordnungsmöglichkeit in einer Variante einer Pick-up-Lösung darstellt.

Bei der in Fig. 1 dargestellten Werkzeugmaschine handelt es sich um eine für eine Schälbearbeitung mit einem Schälrad S ausgelegte Maschine 100. Werkstückseitig weist die Maschine 100 einen im Maschinenbett 90 drehbar angetrieben gelagerten Werkzeugtisch 80 auf, in dem ein in Fig. 1 nicht dargestelltes, zu bearbeitendes Werkstück, beispielsweise mit einer zu bearbeitenden Innenverzahnung, um die werkstückseitige Maschinendrehachse C1 drehbar aufspannbar ist.

Werkzeugseitig weist die Maschine 100 eine lineare Maschinenachse X1 für eine bezüglich des Werkstücks radiale Positionierbewegung des Werkzeugs auf, eine Achse Z1 für eine Bewegung des Werkzeugs entlang der Axialrichtung der Tischachse C1, und eine Achse Y1 für eine tangentiale Relativbewegung zwischen Werkzeug und Werkstück. Diese linearen Achsen X1, Z1 sind rechtwinklig zueinander und werden über eine Schlittenanordnung 70 realisiert, bei der ein Linearschlitten 72 für die X1-Bewegung einen Vertikalschlitten 74 für die Z1-Bewegung trägt. Der das Werkzeug S tragende Werkzeugkopf 78, der in diesem Ausführungsbeispiel auch einen CNC-Antrieb als Direktantrieb für die Werkzeugdrehung mit Drehachse B1 trägt, ist mit einem Linearschlitten 76 für die Tangentialbewegung Y1 beweglich. Der Tangentialschlitten 76 ist jedoch am Vertikalschlitten 74 drehbar gelagert mit Schwenkachse A1 angeordnet, so dass dessen Schlittenbewegung nur in der in der Figur 1 gezeigten Stellung horizontal verläuft, und ansonsten gegenüber der Z1-Achse um den eingestellten Schwenkwinkel A1 geneigt ist.

Darüber hinaus weist die Maschine 100 noch ein weiteres Bewegungssystem auf, mit dem ein Nachschleifwerkzeug N in nachschleifenden Bearbeitungseingriff mit dem in der Werkzeugaufspannung des Werkzeugkopfs 78 eingespannten Schälrads S gebracht werden kann, wobei zur Herstellung des Nachschleifeingriffs auch die werkzeugseitigen Linear- und Drehachsen eingesetzt werden (können). In dem dargestellten Ausführungsbeispiel ist das in diesem Ausführungsbeispiel in Form einer Topfscheibe gebildete Nachschleifwerkzeug N in einer orthogonal zur X1-Z1-Ebene stehenden Tangentialrichtung Y beweglich. Es kann somit bezüglich der Radialrichtung X1 seitlich in den Bearbeitungsraum eingebracht werden. Diese Beweglichkeit in Y-Richtung ist durch einen Doppelschlitten 41, 42 realisiert, von denen der untere Schlitten 41 für eine Positionierung mit Achse Y3 vorgesehen ist, während der obere Schlitten 42 für die Schleif-Hubbewegung vorgesehen ist. Zudem ist eine das Nachschleifwerkzeug N tragende und um die Achse D1 drehend antreibende Nachschleifspindel 44 in einer orthogonal zur Y-Richtung liegenden Ebene schwenkbar angeordnet (die Schwenkachse ist mit A2 bezeichnet), so dass sich in einer parallel zur X1-Z1-Ebene verlaufenden Ebene ein Winkel ξ zwischen der Axialrichtung der Drehachse D1 und der Achse Z1 (C1) einstellbar ist.

Denkbar sind auch Varianten, bei denen für die Schleif-Hubbewegung die Y1-Achse (ggf. in Kombination mit Z1) des Werkzeugkopfs 78 herangezogen wird und ggf. dann Achsen am Schleifkopf wie Y2 eingespart werden. Ebenfalls denkbar ist eine zusätzliche Achse X2 des Schleifkopfs parallel zur X1-Richtung.

Hat nun das Schälrad S mit seinen beschichteten Zähnen aufgrund der Bearbeitung der Werkstücke einen bestimmten Verschleiß erreicht, werden die Spanflächen des Schälrads S nachgeschliffen.

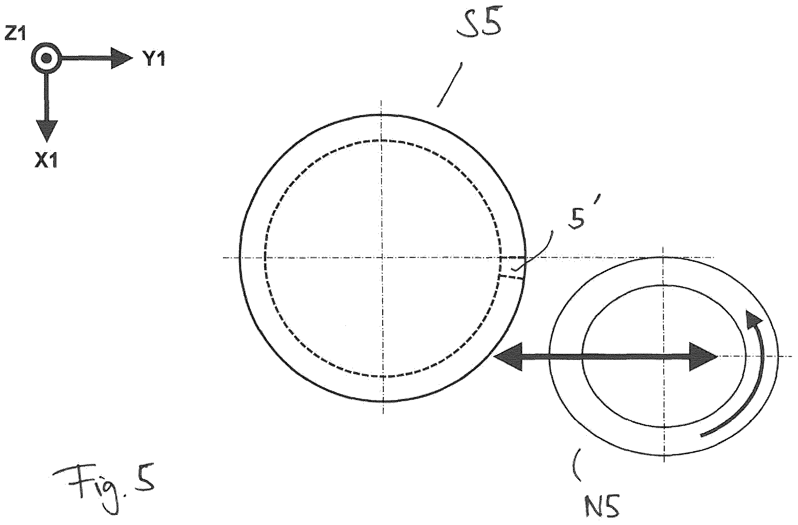

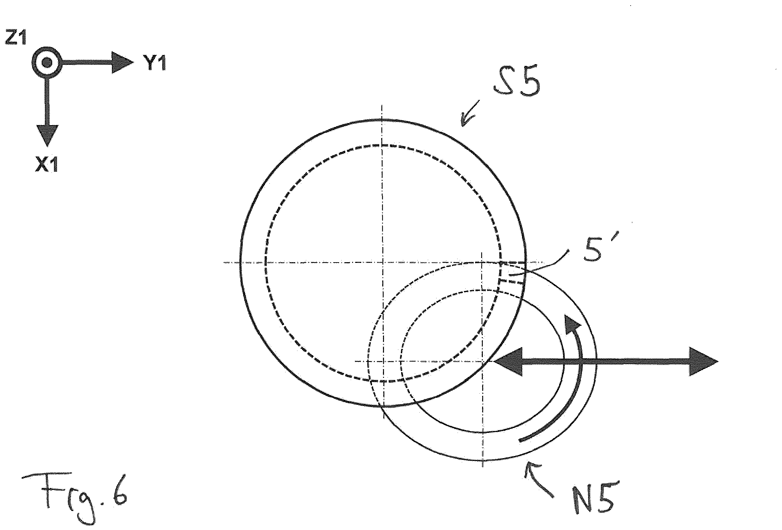

Dies wird im Folgenden für ein Schälrad S beschrieben, das im Treppenschliff ausgeführt ist (siehe auch Fig. 2) und einen von Null verschiedenen Kopfspanwinkel aufweist. In diesem Fall wird das Nachschleifwerkzeug N auf den Treppenschliffwinkel des Schälrads S eingeschwenkt mit Schwenkachse A2. Die Schwenkachse A1 des Schälrads S wird auf den Kopfspanwinkel des Schälrads S eingeschwenkt. In dieser Einstellung verläuft eine Mittellinie einer (im indexierenden Verfahren) nachzuschleifenden, in der bezüglich der Radialachse X1 90°-Position der Seite des Nachschleifwerkzeugs N zugewandten Spanfläche 5 horizontal. Bei der Schleif-Hubbewegung (Achse Y2, siehe auch Figuren 5, 6)) bewegt sich dann der Bearbeitungsbereich bei dem Schleifhub entlang der Spanfläche 5, wobei die Orientierung des schleifenden Bereichs der Topfscheibe N mit der Orientierung der Spanfläche 5 übereinstimmt, so dass die Spanfläche 5 um einen vorgesehenen Abtrag abgeschliffen werden kann. Es versteht sich, dass die Z1-Achse des Schälrads S für die Höheneinstellung des Bearbeitungseingriffs und die Zustellung eingesetzt werden kann, während die XY-Maschinenachsen der Positionierung dienen. Neben den Spanflächen 5 können bei Verwendung eines Werkzeugs S wie in Fig. 2 gezeigt auch dessen Seitenflächen 6 nachgeschliffen werden.

Durch die bezüglich der Radialachse X1 seitlichen Zuführung des Nachschleifwerkzeugs N werden maschinenseitig konkurrierende Platzbedarfansprüche vermieden. Zudem werden aufgrund der Parallelität von Schleifhub- und Zuführrichtung des Nachführwerkzeugs Vibrationen beim Nachschleifen weitestgehend vermieden. Wenn auf diese Weise in indexierender Bearbeitung nacheinander alle Spanflächen 5 nachgeschliffen sind, wird das Nachschleifwerkzeug N zurückgezogen und die Verzahnungsbearbeitung durch das Schälrad S kann wiederaufgenommen und fortgesetzt werden.

Die wegen der geänderten Schälradform aufgrund des Nachschleifens (geringerer Durchmesser, geringere Höhe) erforderlichen Änderungen in den Maschinenachseinstellungen für die weitere Bearbeitung werden von der Maschinensteuerung automatisch berechnet. Die Maschinensteuerung hat die dazu erforderlichen Informationen aus der in ihr hinterlegten Werkzeugauslegung und Kenntnis des bei dem Nachschärfen vorgenommenen Abtrags über die Achspositionen der dabei eingesetzten Maschinenachsen.

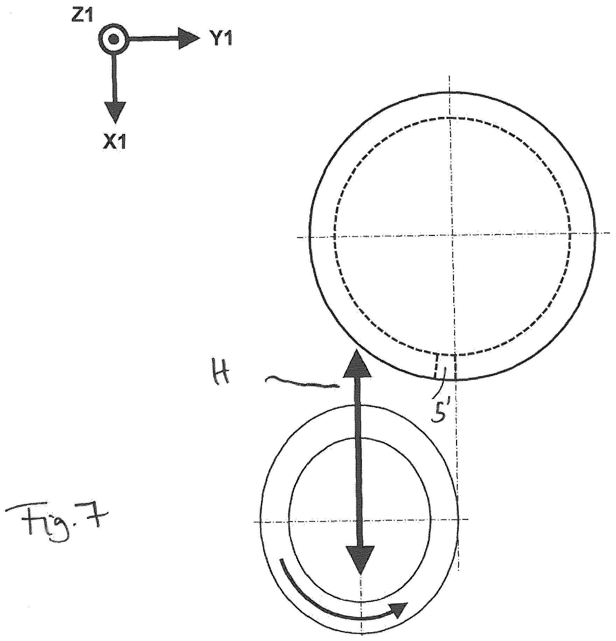

Der Schleifhub könnte allerdings in alternativen Ausführungsformen auch in der X1-Maschinenrichtung erfolgen (siehe auch Fig. 7), wenn z.B. auf der Seite des Werkzeugs nachgeschliffen wird, die dem Haupt-Maschinen-Ständer (70) am nächsten (0°-Position z.B. für Innenverzahnungen) oder am weitesten (180°-Position, z.B. für Außenverzahnungen) ist. In diesem Fall würde man bevorzugt die Schwenkachseinstellung des Werkzeugkopfes 78 auf den Bearbeitungsachskreuzwinkel eingestellt bleiben lassen. Beispielsweise könnte man, wenn die Werkstückbearbeitung die von Innenverzahnungen ist, wo in der Null°-Position gearbeitet wird, in der 180°-Position auf das Doppelte des gegenteiligen Achskreuzwinkels einstellen, um die Spanfläche 5 horizontal zu stellen. Es ist jedoch auch denkbar, den Achskreuzwinkel nicht derart zu ändern oder ihn in der Position der Bearbeitung zu belassen. Dann könnte vorgesehen werden, dass der Schleifkopf (44) noch eine weitere Schwenkachse erhält, denkbar ist auch das Heranziehen stark kegeliger Mantelflächen an einer nicht als Topfscheibe ausgeführten Schleifscheibe. Im Falle ohne Kopfspanwinkel wären dann radial horizontal verlaufende Spanflächen nachzuschleifen, im Falle vorhandener Kopfspanwinkel könnte beispielsweise durch eine Zusatzbewegung der Maschinenachse Z1 der Nachschleifkontakt aufrechterhalten bleiben. Hierfür könnte man bei Verwendung einer Topfscheibe die Achse A2 (Fig. 1) auf den Kopfspanwinkel einschwenken; dabei wird durch die Schwenkachse A2 des Nachschleifkopfes die gleiche Orientierung der zu schleifenden Fläche im Bearbeitungseingriff eingestellt.

Bevorzugt würde man bei dieser Variante das Nachschleifen an der Seite des Werkzeugs S ausführen, die dem Haupt-Maschinen-Ständer (Schlittenanordung 70) am nächsten ist, um Platzkonkurrenz mit dem Werkstücktisch 80 zu vermeiden. Dies ist gerade bei einer Bearbeitung von Innenverzahnungen von Bedeutung, da dann über die Schwenkachse A1 des Werkzeugkopfs 78 nicht eingeschwenkt werden muss. Bei einer Außenverzahnung müsste in der 180°-Position nachgeschliffen werden, wenn man nicht über die Schwenkachse A1 einschwenken will. In der 180°-Position sind dann oftmals günstigere Verhältnisse des verfügbaren Bauraums vorhanden. Insbesondere für den Fall, dass das Schälrad S keinen Kopfspanwinkel hat, kann auch daran gedacht werden, die Rotationsbewegung des Nachschleifwerkzeugs N über die bei der Bearbeitung die Werkstücke tragende Spindel (bei einer Konstellation ähnlich Fig. 1 den Maschinentisch 80) heranzuziehen und den Schleifhub über die Radialachse X1 auszuführen. Diese Variante ist zudem auch bei Kopfspanwinkel ungleich Null denkbar, indem die Radialachse X1 für den Schleif-hub herangezogen wird, und ein aufeinander abgestimmter Offset des Eingriffsbereichs (gegenüber der 0° Position) mit Überlagerungsbewegungen Y1 und Z1 herangezogen wird.

Über die vorhandenen Maschinenachsen der in Fig. 1 dargestellten Anordnung einerseits für das Schälrad S und für das Nachschärfwerkzeug N können auch Überlagerungsvarianten ausgeführt werden, bei denen der Schleifhub in einer diagonalen Richtung (d.h., mit X- und Y-Richtungskomponente) erfolgt. Dann wird bevorzugt der Schwenkwinkel (A1-Achse) des Schälrads S in Abhängigkeit der Schleif-Hub-Richtung und des für das Nachschleifwerkzeug N eingestellten Winkels ξ passend zum gewünschten Kopfspanwinkel eingestellt.

Je nach Abmessung des herangezogenen Nachschleifwerkzeugs N ist es auch denkbar, auf die Realisierung eines Schleifhubs vollständig zu verzichten, nämlich wenn eine Spanfläche 5 bereits komplett abgedeckt wird. Das Nachschleifen wäre dann ein Tauchschleifen.

Zur genauen Feststellung der Relativlage zwischen Schälrad S und Nachschleifwerkzeug N ist es möglich, das Schälrad S mit dem Nachschleifwerkzeug N in axialer Richtung wie auch in Umfangsrichtung anzutasten, um die genaue relative Höhenposition sowie relative Winkellage der Zähne des Werkzeugs S zum Schleifwerkzeug N zu ermitteln. Dies ist insbesondere nach einem Wechsel von Bearbeitungswerkzeug S und/oder Nachschleifwerkzeug N angezeigt. Denn ein Einschwenken des Schleifkopfs 78 ermöglicht es, das Werkzeug S im Bearbeitungsachskreuzwinkel zu belassen. Allerdings mag die Winkellage der Werkzeugzähne 4 aufgrund der vorangegangenen Bearbeitung und Überwachung der Maschinenachse B1 bereits bekannt sein. Für die Kontakterkennung kommt dabei eine Geräuscherkennung in Frage, wie auch eine Überwachung der Maschinenachsen beispielsweise über eine Drehmomentänderung an der Werkzeug- oder Werkstückspindel (B1/C1). Auch visuelle Erkennungsmethoden wie Funkenbildung könnten herangezogen werden.

Ein solches Antasten ist zudem ebenfalls dann bevorzugt, wenn das Nachschleifwerkzeug N selbst einem Abziehvorgang unterworfen wurde. Es kann vollautomatisch ablaufen, d.h. die Maschine 100 führt das Antasten selbständig aus, oder unter grober Vorpositionierung durch einen Bediener halbautomatisch oder alternativ Software-geführt, wenn der Bediener das Antasten über die Maschinenbedienoberfläche steuert. Auch eine rein manuelle Variante durch Antasten durch Achsbewegungen mittels Handsteuerung ist denkbar.

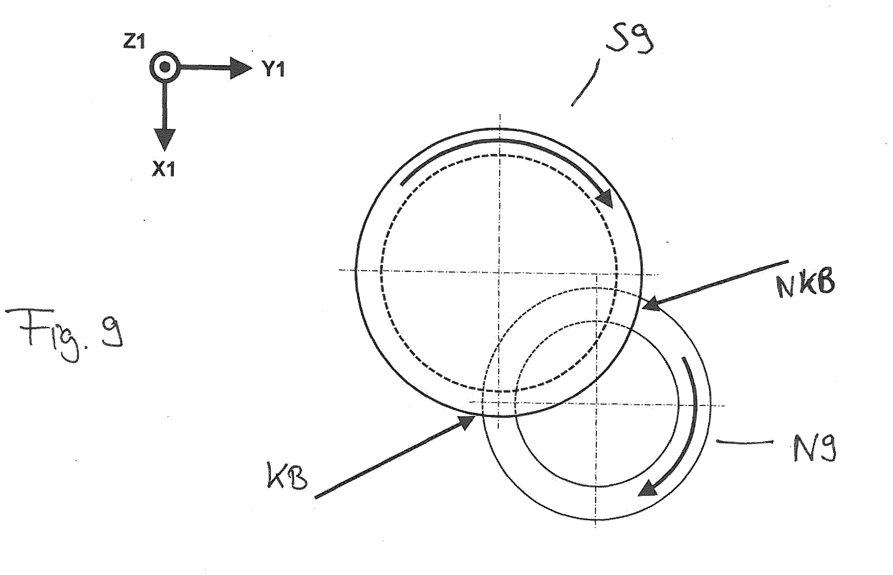

Wird beispielsweise mit Schälrädern gearbeitet, die keinen Treppenschliff aufweisen, kann neben dem intermittierenden Verfahren auch ein kontinuierliches Verfahren für das Nachschleifen zum Einsatz kommen. Bei Realisierung beispielsweise mit einer Topfscheibe als Nachschleifwerkzeug würde man beispielsweise das Schälrad auf einen Winkel (A1) von 0° einschwenken, also für im Wesentlichen horizontale Spanflächen einstellen bzw. in einer solchen bereits eingestellten Einstellung belassen. Eine kontinuierliche Drehung des Schälrads wird über die Achse B1 realisiert. Bei Verwendung einer Topfscheibe ergibt sich in einer bevorzugten Gestaltung (siehe Fig. 9) ein Überlappungsbereich in zwei nicht zusammenhängenden Bereichen des Schälrads. Hierbei wird es bevorzugt, dass durch eine minimale Abweichung einer Parallelität zwischen den schleifenden Flächen des Nachschleifwerkzeugs und den geschliffenen Flächen des Schälrads dafür Sorge getragen wird, dass nur in einem der nicht zusammenhängenden Bereiche (KB) eine schleifende Bearbeitung stattfindet, in dem anderen Bereich (NKB) ist aufgrund dieser geringfügigen Abweichung kein Kontakt vorhanden (beispielsweise wird das Nachschleifwerkzeug in der Größenordnung wenige Hundertstel Grad, z.B. 0,01 bis 0,03° abweichend von Null eingeschwenkt, so dass in dem anderen Überlappungsbereich NKB eine Abhebung zwischen Nachschleifwerkzeug und Schälrad und somit kein Kontakt mehr erfolgt). Diese geringe Abweichung in der Parallelität der beiden Ebenen könnte auch über die Schwenkachse (A1) des Schälrads erreicht werden. In diesem Fall ist es wiederum möglich, die rotatorische Bewegung des Nachschleifwerkzeugs über die Werkstückspindel C1 zu bewirken. Ansonsten kann die Nicht-Parallelität auch über die Schwenkachse A2 des Nachschleifwerkzeugs eingestellt werden.

Sorgt man auf diese Weise dafür, dass in nur einem (KB) der beiden Überlappungsbereiche nachgeschliffen wird, können bevorzugt im Wesentlichen radial verlaufende Schleifriefen erzeugt werden, die als vorteilhaft angesehen werden.

In einem konkreten Beispiel (hier: Kopfspanwinkel Null) könnte etwa die Schnittgeschwindigkeit der Topfscheibe 30 m/s betragen, und bei einer Drehgeschwindigkeit von 1/s Umdrehungen des Schälrads mit beispielsweise einem Schälrad-Durchmesser von 200 mm mit einer resultierenden Schälrad-Umfangsgeschwindigkeit von 0,63 m/s könnte erreicht werden, dass die Schleifriefen nur wenige Grad von der radialen Richtung (Schälradsystem mit Schälradmitte) abweichen, in dem konkreten Rechenbeispiel sogar nur um 1,2°. Wie oben bereits gesagt, kann hierzu bereits eine Schwenkwinkeleinstellung im Bereich von +-0,01 bis 0,03° genügen, je nach Durchmesser der Topfscheibe. Die Schleifrichtung soll dabei bevorzugt in Richtung auf die Mitte des nachgeschliffenen Werkzeugs weisen.

Sofern Kopfspanwinkel von ungleich Null Grad erzeugt werden sollen, könnten die Spanflächen auch in Form von Kalotten geschliffen werden, allerdings mit einer in radialer Richtung etwas gekrümmten Oberfläche. Alternativ zu dem oben erwähnten Aufeinanderabstimmen könnte zum Erzeugen von Kopfspanwinkeln ungleich Null Grad auch noch eine zusätzliche, in Fig. 1 nicht dargestellte Schwenkachse des Werkzeugkopfs 78 erreicht werden.

Als diese Topfscheiben könnte grundsätzlich auch ein vergleichsweise flacher Topf herangezogen werden, oder auch eine Tellerscheibe. Im Vergleich zu einer vollen zylindrischen Scheibe wird bei einer Topfscheibe nur ein schmaler Bereich genutzt, der dann entsprechend auch einfacher und genauer abzurichten ist, was Vorteile im Abrichten des Nachschleifwerkzeugs mit sich bringt.

Grundsätzlich denkbar ist auch die Erzeugung von Schleifriefen in überwiegend tangentialer Richtung, allerdings ist diese gegenüber der Variante mit den überwiegend in radialer Richtung verlaufenden Schleifriefen weniger bevorzugt. Allerdings ermöglicht eine solche Variante auch das Nachschleifen mit Mantelflächen von Schleifscheiben (das Schälrad hat hierzu keinen Treppenschliff) über mehrere Zähne hinweg nach dem kontinuierlichen Verfahren. In diesem Fall kann die A1-Schwenkachse für das Schälrad zur Realisierung eines von Null abweichenden Spanwinkels auf einen entsprechenden Winkel eingestellt werden, die Nachschleif-Schleifscheibe wird auf einen Winkel von 90° eingeschwenkt (allerdings nicht mit der A2-Achse, sondern einer zusätzlichen Schwenkachse, mit der die Drehachse D1 des Nachschleifwerkzeugs horizontal und parallel zur Y2-Richtung eingeschwenkt wird. Ein Kopfspanwinkel von ungleich Null kann dann über diese Achse oder alternativ auch über die A1-Achse eingestellt werden), die Z1-Achse dient wiederum der Höheneinstellung und Zustellung, und die verfügbaren Linearachsen orthogonal zur Z1-Richtung der gegenseitigen Positionierung.

In Fig. 2 ist die Gestalt eines Schälrads S gezeigt, das auf der in Fig. 1 dargestellten Maschine 100 zum Einsatz gebracht werden könnte. Man erkennt deutlich die im Treppenschliff ausgebildete Gestaltung der Werkzeugzähne 4 mit den im Treppenschliff geformten Spanflächen 5. Bei dem in Fig. 2 gezeigten Werkzeug S ist auch ein von Null verschiedener Kopfspanwinkel 5 vorhanden, die Spanflächen sind auch bezüglich der Radialrichtung geneigt. Aufgrund der beispielsweise in Fig. 1 gezeigten verfügbaren Maschinenachsen ist erreichbar, dass die Spanflächen 5 in ihrer Orientierung passend zu dem schleifenden Bereich beispielsweise einer topfartigen Schleifscheibe eingestellt werden können.

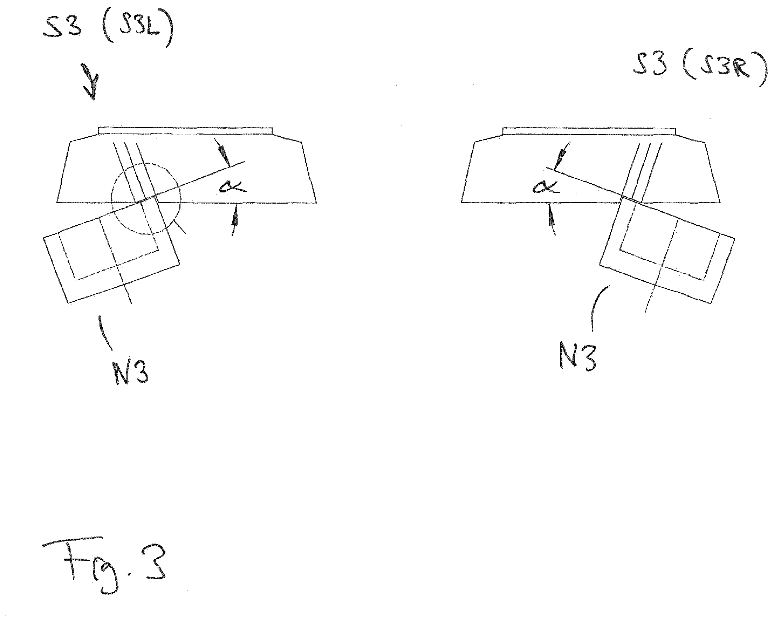

Fig. 3 verdeutlicht die Eingriffssituation beim Nachschleifen eines Schneidrads S3 mit einem Nachschleifwerkzeug N3 in Form einer topfartigen Schleifscheibe. Man erkennt, dass die Drehachsen von Schneidrad S3 und Nachschleifwerkzeug N3 passend zum Treppenschliffwinkel α aufeinander eingeschwenkt sind, einmal für rechts- und einmal für linkshändige Schneidgestaltung.

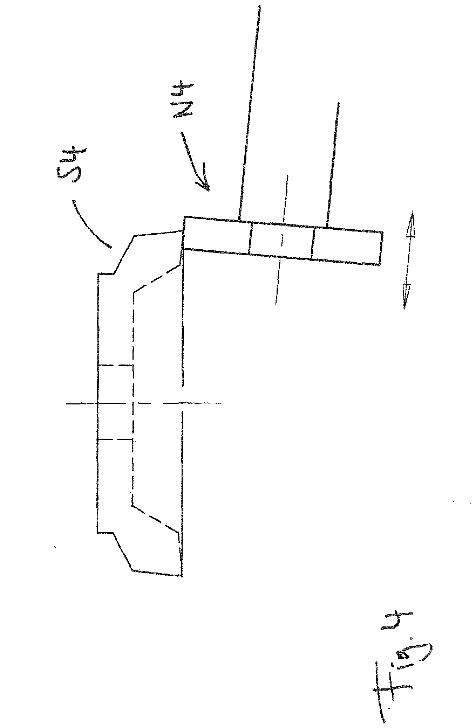

Fig. 4 zeigt schematisch eine Variante, bei der ein nicht mit Treppenschliff versehenes Schneidrad S4 von einer rotierenden zylindrischen Schleifscheibe N4 nachgeschliffen wird. Hier ist erkennbar, wie die relative Winkellage der jeweiligen Drehachsen passend zu einem Kopfspanwinkel des Schneidrads S4 eingestellt sind. Mit dem beidseitigen Pfeil wird eine Schleifhubbewegung angedeutet. Es könnte jedoch auch daran gedacht werden, beispielsweise eine Ausgleichsbewegung in Schneidradachsrichtung vorzunehmen und mit dem Schleifhub zu koppeln. Derartige zylindrische Nachschleifwerkzeuge wie N4 könnten auch im Falle eines Treppenschliffs eingesetzt werden, allerdings nicht in der in Fig. 4 gezeigten Nachschleifposition, sondern in einer bezüglich der Schneidradachse 90°-Position (die eine Zwischenposition zwischen der schälkopfnahen 0°- und schälkopffernen 180°-Position ist) verdreht, ggf. mit Offset.

Die schematische Darstellung von Fig. 5 zeigt eine Positionier- und Schleifhubvariante der in Fig. 1 gezeigten Maschine oder anderer Maschinen mit entsprechenden Bewegungsachsen an. Hier ist eine Schleifhubbewegung senkrecht zur radialen Zustellachse X1 der Verzahnungsmaschine vorgesehen. In Fig. 6 ist dann gezeigt, wie die topfartige Schleifscheibe N5 nahezu die ganze Spanfläche 5' überdeckt, im Rahmen des durch den Doppelpfeil angedeuteten Schleifhubs wird die gesamte Spanfläche 5' nachgeschliffen. Des Weiteren ist die Drehrichtung des Nachschleifwerkzeugs N5 eingezeichnet. Man erkennt, dass im Schleifeingriffsbereich die rotatorische Schleifbewegung von ihrer Richtung her überwiegend radial (bezüglich der Schneidraddrehachse) zur Spanfläche 5' verläuft, mit einer Schleifrichtung zur Werkzeugmitte hin.

Die Figuren 7 (Radial und in Richtung der Achse X1) und 8 (Diagonal) zeigen alternative Schleifhubrichtungen bzw. Positionierungen von Nachschleifwerkzeug zu Schneidrad. Nachgeschliffen wird (weiterhin) eine Spanfläche 5', die im Bereich einer durch die Schneidradmitte gehenden Parallele zur Hubrichtung H liegt. Wiederum ist die Hauptkomponente der rotatorischen Schleifbewegung parallel zur Radialrichtung der Spanfläche 5'; die Schleifrichtung ist entsprechend der bevorzugten Gestaltung zur Werkzeugmitte hin.

Auch in Fällen, in denen das Nachschleifwerkzeug auf den Maschinentisch (C1) aufgespannt wird, ist ein Schleifhub in unterschiedliche Richtungen, einachsig (z.B. X1 oder Y1) oder auch überlagert (X1 und Y1), etwa diagonal, denkbar.

Fig. 9 stellt eine Situation dar, in der das Schneidrad S9 keinen Treppenschliff aufweist. Hier wird im kontinuierlichen Verfahren nachgeschliffen, in der in Fig. 9 dargestellten Positionierung von Schneidrad S9 und einem topfförmigen Nachschleifwerkzeug N9. Man erkennt zwei Bereiche, KB und NKB, in denen aufgrund dieser Positionierung eine Überlappung stattfindet. In dem gezeigten Ausführungsbeispiel wird jedoch nicht beiden Bereichen KB und NKB nachgeschliffen, sondern ein Schleifkontakt besteht nur im Bereich KB, aufgrund einer geringfügigen Neigung der Scheibenebenen des Schneidrads S9 und der Topfscheibe N9. Die jeweiligen Drehgeschwindigkeiten sind dabei so aufeinander abgestimmt, dass im Kontaktbereich KB Schleifriefen erzeugt werden, die im Wesentlichen, jedenfalls mit überwiegender Richtungskomponente bezüglich der Werkzeugdrehachse radial an den Spanflächen verlaufen. Auch hier ist die Schleifrichtung zur Werkzeugmitte hin gerichtet.

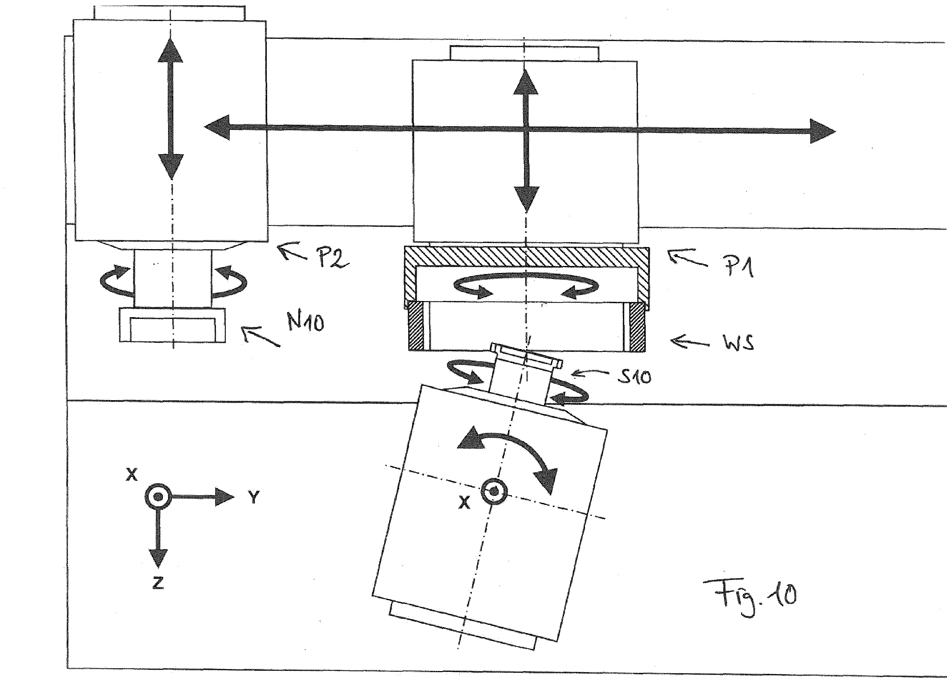

In Fig. 10 ist noch schematisch eine Pick-up-Lösung veranschaulicht, Dargestellt ist ein Schälrad S10, das ein Werkstück WS mit einer Innenverzahnung schneidet. Das Werkstück ist auf einer Pick-up-Spindel P1 aufgespannt. Auf einer anderen Pick-up-Spindel P2 ist ein Nachschleifwerkzeug N10 aufgespannt, das zum Nachschleifen des Schneidrads W10 eingesetzt wird. Dies geschieht durch Positionierung entlang der Achse Y.

Wie aus Obigem ersichtlich, ist die Erfindung nicht auf die in den voranstehenden Beispielen konkret dargestellte Realisierung eingeschränkt.

## Patentansprüche

1. Verfahren zum Bearbeiten von Verzahnungen, zu dem man ein um seine Drehachse drehend angetriebenes, scheibenförmiges und verzahntes Werkzeug (5) mit geometrisch bestimmter Schneide einsetzt, dessen Werkzeugzähne (4) aus einem Grundwerkstoff gefertigt und wenigstens an den Zahnflanken mit einer verschleißfestigkeitserhöhenden Beschichtung versehen sind, sowie einer Stirnseite des Werkzeugs zugewandte Spanflächen (5, 5') aufweisen, welche man von Zeit zu Zeit im Rahmen einer Wiederaufbereitung des Werkzeugs nachschleift, wobei es sich bei dem verzahnten Werkzeug um ein Schälrad für das Wälzschälen oder Hartschälen oder um ein Stoßrad für das Wälzstoßen handelt,
**dadurch gekennzeichnet, dass** man den Einsatz des Werkzeugs nach wenigstens einem Nachschleifen mit jedenfalls entlang der Schneiden aus dem Grundwerkstoff gebildeten Bereichen der Spanflächen wiederaufnimmt und fortsetzt.

2. Verfahren nach Anspruch 1, bei dem der fortgesetzte Einsatz auf der gleichen Verzahnungsmaschine (100) erfolgt wie der Einsatz vor dem Nachschleifen.

3. Verfahren nach Anspruch 1 oder 2, bei dem eine Maschinensteuerung für den fortgesetzten Einsatz insbesondere automatisch eine Information über die Abtragtiefe beim Nachschärfen erhält.

4. Verfahren nach einem der vorhergehenden Ansprüche, bei dem der fortgesetzte Einsatz ohne zwischenzeitliche Vermessung einer ersten nach Wiederaufnahme bearbeiteten Verzahnung erfolgt.

5. Verfahren nach einem der vorhergehenden Ansprüche, bei dem das Nachschleifen auf einer über einen Werkzeugwechsler mit einer Verzahnungsmaschine, auf welcher der vorherige oder fortgesetzte Einsatz erfolgt, gekoppelten Nachschleifstation erfolgt.

6. Verfahren nach einem der Ansprüche 1 bis 4, bei dem das Nachschleifen in der Werkzeugaufspannung einer Verzahnungsmaschine (100) erfolgt, auf der der vorherige und/oder fortgesetzte Einsatz erfolgt.

7. Verfahren nach Anspruch 6, bei dem man das Nachschleifwerkzeug aus einer bezüglich einer radialen Zustellbewegung (X1) der Verzahnungsbearbeitung, tangentialen Richtung (Y) zuführt.

8. Verfahren nach einem der vorhergehenden Ansprüche, bei dem die Spanfläche unter Ausführung einer insbesondere horizontalen Schleif-Hubbewegung (H) nachgeschliffen wird.

9. Verfahren nach einem der Ansprüche 6 bis 8, bei dem ein Schwenkwinkel (A1) der Werkzeugachsorientierung zwischen dem Einsatz bei der Bearbeitung und dem Nachschleifen unverändert bleibt.

10. Verfahren nach einem der Ansprüche 6 bis 9, bei dem das Werkzeug einen von Null verschiedenen Kopfspanwinkel aufweist und ein Schwenkwinkel (A1) für die Werkzeugachsorientierung zum Nachschleifen auf den Kopfspanwinkel eingestellt wird.

11. Verfahren nach einem der Ansprüche 6 bis 10, bei dem wenigstens eine das Nachschleifwerkzeug aktiv bewegende Maschinenachse (Y3) zur Relativpositionierung des Nachschleifwerkzeugs zu dem nachzuschleifenden Werkzeug eingesetzt wird.

12. Verfahren nach einem der Ansprüche 6 bis 11, bei dem wenigstens eine das nachzuschleifende Werkzeug aktiv bewegende Maschinenachse (X1, Y1, Z1) zur Relativpositionierung zwischen Nachschleifwerkzeug und Werkzeug eingesetzt wird.

13. Verfahren nach einem der Ansprüche 6 bis 12, bei dem am Werkzeug überwiegend radial verlaufende Schleifriefen erzeugt werden und insbesondere Drehbewegungen von Werkzeug und Nachschleifwerkzeug zur Erzeugung von am Werkzeug überwiegend radial verlaufenden Schleifriefen aufeinander abgestimmt werden.

14. Verfahren nach einem der Ansprüche 1 bis 13, bei dem das Nachschleifen für PM-HSS-Werkzeuge bereits bei oder vor Erreichen einer Verschleißmarkenbreite von 0,16 mm, weiter bevorzugt 0,13 mm, insbesondere 0,1 mm und für HM-Werkzeuge bereits vor oder bei Erreichen einer Verschleißmarkenbreite von 0,08 mm, weiter bevorzugt von 0,065 mm, insbesondere von 0,05 mm vorgenommen wird.

15. Steuerprogramm für eine Verzahnungsmaschine, das, wenn auf der Maschinensteuerung der Verzahnungsmaschine ausgeführt, die Verzahnungsmaschine zur Ausführung eines Verfahrens nach einem der vorhergehenden Ansprüche steuert.

16. Verzahnungsmaschine (100) mit einer Werkstückspindel (C1) zur drehend antreibbaren Lagerung eines eine Verzahnung tragenden Werkstücks, einer Werkzeugspindel (B1) zur drehend angetriebenen Lagerung eines scheibenförmigen und verzahnten Werkzeugs mit geometrisch bestimmter Schneide und mit Maschinenachsen (X1, Y1, Z1) zur Relativpositionierung von Werkzeug und Werkstück sowie einer Maschinensteuerung zur Steuerung der mit dem Werkzeug ausgeführten Verzahnungsbearbeitung,
**dadurch gekennzeichnet, dass** die Maschinensteuerung ein Steuerprogramm nach Anspruch 15 aufweist und Bewegungsmittel (41, 42, 44) aufweist, die bei Betätigung ein Nachschleifwerkzeug zum Nachschleifen der Spanflächen (5) der Werkzeugzähne (4) in Schleifeingriff mit dem Werkzeug bringt.

17. Verzahnungsmaschine nach Anspruch 16, bei der die Bewegungsmittel wenigstens eine Maschinenachse (Y2, Y3) aufweisen, die die Lage oder Orientierung einer Drehachse des Nachschleifwerkzeugs veränderbar einstellen kann.

## Claims

1. A method for machining toothings, which method uses a disc-shaped, toothed tool (5) that is rotationally driven around its axis of rotation and has a geometrically defined cutting edge, the teeth (4) of which tool are produced from a base material and are provided, at least on the tooth flanks, with a coating that improves wear resistance, and have cutting faces (5, 5') facing an end face of the tool, said cutting faces being reground from time to time as part of a reconditioning of the tool, wherein the toothed tool is a skiving wheel for power skiving or hard skiving or a shaper cutter for gear shaping,
**characterised in that** after at least one regrinding, use of the tool is resumed and continued, wherein regions of the cutting faces are then formed from the base material along the cutting edges.

2. The method according to claim 1, wherein the continued use takes place on the same toothing machine (100) as the use prior to regrinding.

3. The method according to claim 1 or 2, wherein a machine controller for the continued use receives information - in particular automatically - about the depth of removal during regrinding.

4. The method according to one of the preceding claims, wherein the continued use takes place without an interim measurement of a first toothing machined after resumption of use.

5. The method according to one of the preceding claims, wherein the regrinding takes place on a regrinding station coupled by means of a tool changer to a toothing machine on which the prior or continued use takes place.

6. Method according to one of claims 1 to 4, wherein the regrinding takes place in the tool chuck of a toothing machine (100) on which the prior and/or continued use takes place.

7. The method according to claim 6, wherein the regrinding tool is fed from a direction (Y) tangential to a radial feed motion (X1) of the toothing machining.

8. The method according to one of the preceding claims, wherein the cutting face is reground by performing a grinding stroke motion (H) that is in particular horizontal.

9. The method according to one of claims 6 to 8, wherein a pivot angle (A1) of the tool axis orientation remains unchanged between the use during machining and regrinding.

10. The method according to one of claims 6 to 9, wherein the tool has a non-zero axial rake angle, and a pivot angle (A1) for the tool axis orientation for regrinding is set to the axial rake angle.

11. The method according to one of claims 6 to 10, wherein at least one machine axis (Y3) that actively moves the regrinding tool is used for positioning the regrinding tool relative to the tool to be reground.

12. The method according to one of claims 6 to 11, wherein at least one machine axis (X1, Y1, Z1) that actively moves the tool to be reground is used for relative positioning between the regrinding tool and the tool.

13. The method according to one of claims 6 to 12, wherein grinding grooves extending in a predominantly radial direction are produced on the tool and in particular rotary motions of the tool and regrinding tool are synchronised to produce grinding grooves on the tool which extend in a predominantly radial direction.

14. The method according to one of claims 1 to 13, wherein the regrinding is performed when or even before reaching a wear mark width of 0.16 mm, more preferably 0.13 mm, in particular 0.1 mm for PM HSS tools, and when or even before reaching a wear mark width of 0.08 mm, more preferably 0.065 mm, in particular 0.05 mm for carbide tools.

15. A control program for a toothing machine, which, when executed on the machine controller of the toothing machine, controls the toothing machine to perform a method according to one of the preceding claims.

16. A toothing machine (100) comprising: a workpiece spindle (C1) for a rotatably drivable mounting of a workpiece having a toothing; a tool spindle (B1) for a rotatably driven mounting of a disc-shaped, toothed tool that has a geometrically defined cutting edge and machine axes (X1, Y1, Z1) for the relative positioning of the tool and workpiece and a machine controller for controlling the toothing machining performed with the tool,
**characterised in that** the machine controller has a control program according to claim 15 and means of movement (41, 42, 44) which, when actuated, bring a regrinding tool for regrinding the cutting faces (5) of the tool teeth (4) into a grinding engagement with the tool.

17. The toothing machine according to claim 16, wherein the means of movement have at least one machine axis (Y2, Y3) which can variably set the position or orientation of an axis of rotation of the regrinding tool.

## Revendications

1. Procédé d'usinage de dentures, dans le cadre duquel on utilise un outil (5) en forme de disque et denté, doté d'un tranchant d'une certaine géométrie et qui est entraîné en rotation sur son axe de rotation, et dont les dents (4) sont réalisées à partir d'un matériau de base et sont pourvues d'un revêtement augmentant la résistance à l'usure au moins sur les flancs de dents, et présentent des faces d'attaque *(5, 5')* tournées vers une face frontale de l'outil, qui sont réaffûtées de temps en temps dans le cadre d'un reconditionnement de l'outil, l'outil denté étant une roue de power-skiving ou de hard skiving ou une roue de taillage de dentures par mortaisage,
**caractérisé en ce que** l'on reprend et l'on poursuit l'utilisation de l'outil après au moins un réaffûtage, lequel présente alors, au moins le long des tranchants, des zones de face d'attaque formées à partir du matériau de base.

2. Procédé selon la revendication 1, dans lequel la poursuite de l'utilisation de l'outil s'effectue sur la même machine à tailler les dentures (100) que l'utilisation précédant le réaffûtage.

3. Procédé selon la revendication 1 ou 2, dans lequel un dispositif de commande machine reçoit, notamment de manière automatique, une information sur la profondeur d'enlèvement mise en œuvre lors du réaffûtage, qui servira lors de la poursuite de l'utilisation.

4. Procédé selon l'une des revendications précédentes, dans lequel la poursuite de l'utilisation s'effectue sans relevés de mesure intermédiaires d'une première denture usinée après la reprise.

5. Procédé selon l'une des revendications précédentes, dans lequel le réaffûtage s'effectue sur un poste de réaffûtage couplé, par le biais d'un changeur d'outils, à une machine à tailler les dentures sur laquelle se produit l'utilisation précédente ou suivante.

6. Procédé selon l'une des revendications 1 à 4, dans lequel le réaffûtage a lieu dans le même dispositif d'ablocage d'outil d'une machine à tailler les dentures (100) sur laquelle se produit l'utilisation précédente et/ou suivante.

7. Procédé selon la revendication 6, dans lequel on amène l'outil de réaffûtage à partir d'une direction (Y) qui est tangentielle par rapport à un mouvement d'avance radial (X1) de l'usinage de dentures.

8. Procédé selon l'une des revendications précédentes, dans lequel la surface d'attaque est réaffûtée sous l'effet d'un mouvement de course d'affûtage (H) notamment horizontal.

9. Procédé selon l'une des revendications 6 à 8, dans lequel un angle de pivotement (A1) de l'orientation de l'axe de l'outil reste inchangé entre l'utilisation en usinage et le réaffûtage.

10. Procédé selon l'une des revendications 6 à 9, dans lequel l'outil présente un angle de coupe différent de zéro, et un angle de pivotement (A1) pour l'orientation de l'axe de l'outil pour le réaffûtage est réglé sur l'angle de coupe.

11. Procédé selon l'une des revendications 6 à 10, dans lequel au moins un axe machine (Y3) déplaçant activement l'outil de réaffûtage est utilisé pour le positionnement relatif de l'outil de réaffûtage par rapport à l'outil à réaffûter.

12. Procédé selon l'une des revendications 6 à 11, dans lequel au moins un axe machine (X1, Y1, Z1) déplaçant activement l'outil à réaffûter est utilisé pour le positionnement relatif entre l'outil de réaffûtage et l'outil.

13. Procédé selon l'une des revendications 6 à 12, dans lequel des rainures de rectification principalement radiales sont produites sur l'outil et des mouvements notamment de rotation de l'outil et de l'outil de réaffûtage sont coordonnés entre eux pour produire sur l'outil des rainures de rectification principalement radiales.

14. Procédé selon l'une des revendications 1 à 13, dans lequel, pour les outils PM-HSS, le réaffûtage s'effectue avant même qu'une largeur de marque d'usure de 0,16 mm, de préférence de 0,13 mm, et notamment de 0,1 mm ne soit atteinte ou dès qu'elle est atteinte, et pour les outils au carbure, celui-ci s'effectue avant même qu'une largeur de marque d'usure de 0,08 mm, de préférence 0,065 mm et notamment de 0,05 mm ne soit atteinte ou dès qu'elle est atteinte.

15. Programme de commande pour une machine à tailler les dentures qui, lorsqu'il est exécuté sur le dispositif de commande machine de la machine à tailler les dentures, commande ladite machine pour mettre en œuvre un procédé selon l'une des revendications précédentes.

16. Machine à tailler les dentures (100) comprenant une broche porte-pièce (C1) pour le montage, avec faculté d'entraînement en rotation, d'une pièce portant une denture, une broche porte-outil (B1) pour le montage, entraîné en rotation, d'un outil en forme de disque et denté, doté d'un tranchant d'une certaine géométrie, et comprenant des axes machine (X1, Y1, Z1) pour le positionnement relatif de l'outil et de la pièce ainsi qu'un dispositif de commande machine pour commander l'usinage des dentures effectué avec l'outil,
**caractérisé en ce que** le dispositif de commande machine comporte un programme de commande selon la revendication 15 et présente des moyens de déplacement (41, 42, 44) qui, lorsqu'ils sont actionnés, amènent un outil de réaffûtage destiné à réaffûter les surfaces d'attaque (5) des dents d'outil (4) en contact d'affûtage avec l'outil.

17. Machine à tailler les dentures selon la revendication 16, dans laquelle les moyens de déplacement présentent au moins un axe machine (Y2, Y3) permettant de régler de manière variable la position ou l'orientation d'un axe de rotation de l'outil de réaffûtage.
